# EUROPÄISCHE PATENTSCHRIFT

(11) **EP 3 988 324 B1**
(45) Veröffentlichungstag und Bekanntmachung des Hinweises auf die Patenterteilung: **21.06.2023**
(21) Anmeldenummer: 21200380.0
(22) Anmeldetag: 01.10.2021
(51) Int. Cl.: B60B 19/00

(54) **ALLSEITENRAD**
OMNI WHEEL
ROUE HOLONOME

(30) Priorität: 26.10.2020 DE 102020128126
(43) Veröffentlichungstag der Anmeldung: 27.04.2022
(73) Patentinhaber: fischertechnik GmbH, 72178 Waldachtal (DE)
(72) Erfinder: Leopold, Gunter, 72270 Baiersbronn (DE); Bastian, Ulf-Lothar, 72285 Pfalzgrafenweiler (DE); Teufel, Jochen, 72336 Balingen (DE)
(74) Vertreter: Suchy, Ulrich Johannes

(56) Entgegenhaltungen:
- WO-A1-2019/237715
- CN-A- 106 739 781
- CN-U- 210 302 393
- DE-A1-102018 106 592
- DE-A1-102019 211 937
- TW-A- 202 009 147
- US-A1- 2009 065 113
- US-A1- 2017 361 648
- US-A1- 2018 229 547

## Beschreibung

Die Erfindung betrifft ein Allseitenrad mit den Merkmalen des Oberbegriffs des Anspruchs 1. Allseitenräder werden auch als omnidirektionale Räder bezeichnet.

Ein Allseitenrad weist Rollen an seinem Umfang auf, deren Rollenachsen rechtwinklig oder in einem Winkel schräg zu einer Radialebene des Allseitenrads angeordnet sind, wodurch das Allseitenrad auf seinen Rollen in allen Richtungen rollbar ist.

Das Gebrauchsmuster CN 2016 58 844 U offenbart ein Spielzeugauto mit vier Allseitenrädern, die mit jeweils einem eigenen Elektromotor drehend antreibbar sind. Rollenachsen der Allseitenräder sind schräg in einem stumpfen Winkel zu Radialebenen der Allseitenräder angeordnet, wobei die Winkel aller Rollenachsen gleich sind, allerdings die Winkel der Rollenachsen der Allseitenräder einer Fahrzeugachse und die Winkel der Rollenachsen eines vorderen und eines hinteren Allseitenrads einer Fahrzeugseite einander entgegengesetzt schräg orientiert sind. Radachsen der Allseitenräder des Spielzeugautos sind nicht schwenkbar, das Spielzeugauto wird durch einen unterschiedlich schnellen und eventuell entgegengesetzten Drehantrieb seiner Allseitenräder gelenkt.

Aufgabe der Erfindung ist, ein Allseitenrad vorzuschlagen, das flexibel einsetzbar ist.

Diese Aufgabe wird erfindungsgemäß durch die Merkmale des Anspruchs 1 gelöst. Das erfindungsgemäße Allseitenrad weist zwei Rollkörperträger auf, die um eine Radachse drehbar sind. Am Umfang der Rollkörperträger sind Rollkörper angeordnet, die um Rollkörperachsen drehbar sind. Die Rollkörper können an sich beliebige Körper, auch Hohlkörper, sein, die ein Rollen der Rollkörper auf einem Untergrund bei Drehung der Rollkörper um die Rollkörperachsen ermöglichen. Außer Rollen im Sinne zylindrischer, kegelstumpfförmiger oder tonnenförmiger Rollkörper sind beispielsweise Kugeln als Rollkörper möglich. Insbesondere sind die Rollkörper Rotationskörper, deren Erzeugende eine Gerade oder eine ausschließlich in einer Richtung gekrümmte Kurve ist. Insbesondere weisen die Rollkörper einen kreisförmigen Querschnitt konzentrisch zur Rollkörperachse auf, wobei sich der Querschnitt in axialer Richtung der Rollkörper ändern kann.

"Am Umfang der Rollkörperträger angeordnet" bedeutet eine Anordnung der Rollkörper so, dass das Allseitenrad bei einer Drehung um die Radachse auf den Rollkörpern rollt, wobei sich die Rollkörper um die Rollkörperachsen drehen können aber sich nicht drehen müssen, und/oder dass das Allseitenrad bei einer Drehung der Rollkörper um die Rollkörperachsen auf den Rollkörpern rollt. Die Rollkörper sind mit radialem Abstand von der Radachse und über einen Umfang vorzugsweise, allerdings nicht zwingend, gleichmäßig verteilt angeordnet. Der radiale Abstand der Rollkörperachsen aller Rollkörper von der Radachse des Allseitenrads ist vorzugsweise gleich.

Die Rollkörperachsen verlaufen rechtwinklig oder schräg in einem Rollkörperwinkel zu gedachten Parallelen zur Radachse des erfindungsgemäßen Allseitenrads.

Erfindungsgemäß weisen die Rollkörperträger winkelflexible Rollkörperaufnahmen für die Rollkörper auf, so dass die Rollkörper mit verschiedenen Rollkörperwinkeln am Allseitenrad angeordnet werden können. Möglich ist eine Anordnung der Rollkörper mit stufenlos in einem unbegrenzten oder einem begrenzten Winkelbereich anordenbaren Rollkörperwinkel oder eine Anordnung der Rollkörper mit einstellbaren Rollkörperwinkeln von beispielsweise 30°, 45° oder 60° zu den gedachten Parallelen zur Radachse des Allseitenrads. Vorzugsweise sind die Rollkörper mit gleichen Rollkörperwinkeln in entgegengesetzten Richtungen am Allseitenrad anordenbar.

Eine Verwendung des oder mehrerer erfindungsgemäßer Allseitenräder sind Spielzeugautos und allgemein auf Rädern fahrende Spielzeuge, wie beispielsweise fahrbare Spielzeugroboter. Eine andere Verwendung des erfindungsgemäßen Allseitenrads sind Konstruktionsbaukästen. Ebenso ist eine Verwendung des oder mehrerer erfindungsgemäßer Allseitenräder für "echte" Autos, das heißt für Kraftfahrzeuge, insbesondere Kraftwagen, und allgemein für auf Rädern rollende Landfahrzeuge möglich. Eine weitere Verwendung des oder mehrerer erfindungsgemäßer Allseitenräder sind fahrende Industrieroboter. Noch eine Verwendung für mehrere erfindungsgemäße Allseitenräder sind sogenannte Rollflächen mit erfindungsgemäßen Allseitenrädern, anstelle von Kugeln, auf denen (schwere) Gegenstände leicht in alle Richtungen verschiebbar sind. Dazu sind die Radachsen der Allseitenräder ortsfest in einer gedachten Fläche, insbesondere einer horizontalen oder auch schrägen Ebene angeordnet, wobei die Radachsen der Allseitenräder parallel zueinander sein können, aber nicht sein müssen. Die Aufzählung ist beispielhaft zu einer Veranschaulichung von Verwendungsmöglichkeiten des oder mehrerer erfindungsgemäßer Allseitenräder, die keineswegs abschließend ist. Es besteht eine nahezu unbegrenzte Vielzahl anderer Verwendungsmöglichkeiten.

Vorzugsweise sind die beiden Rollkörperträger in einem festgelegten Winkel miteinander verbunden, wobei auch verschiedene, festgelegte Winkellagen der beiden Rollkörperträger zueinander möglich sind. Der oder die festgelegten Winkel der Rollkörperträger zueinander legen einen Versatz der Rollkörperaufnahmen beiden Rollkörperträger in Umfangsrichtung zueinander fest, wobei die Rollkörperaufnahmen an den beiden Rollkörperträgern auch ohne Versatz in Umfangsrichtung, das heißt in einer Axialebene des Allseitenrads angeordnet sein können.

Eine Ausgestaltung der Erfindung sieht Schnappaufnahmen für Rollkörperwellen als Rollkörperaufnahmen der Rollkörper vor, in die die Rollkörperwellen lösbar eingeschnappt sind. Es können die Rollkörper auf den Rollkörperwellen und/oder die Rollkörperwellen in den Schnappaufnahmen drehbar sein. Eine Änderung des Rollkörperwinkels der Rollkörper des erfindungsgemäßen Allseitenrads ist einfach durch Einschnappen der Rollkörperwellen in andere Schnappaufnahmen oder allgemein durch Anordnen der Rollkörper in anderen Rollkörperaufnahmen möglich.

Um die Rollkörper in einem Rollkörperwinkel wahlweise schräg in zwei entgegengesetzten Richtungen am Allseitenrad anordnen zu können, sieht eine Ausgestaltung der Erfindung jeweils zwei Rollkörperaufnahmen, beziehungsweise Schnappaufnahmen, an einem der beiden Rollkörperträger vor, die bezüglich einer zugeordneten Rollkörperaufnahme, beziehungsweise Schnappaufnahme, des anderen Rollkörperträgers in der Umfangsrichtung gleich weit in entgegengesetzten Richtungen angeordnet sind.

Eine Ausgestaltung der Erfindung sieht vor, dass die Rollkörper Rollkörperwellen mit Kugelköpfen aufweisen, die in Schnappaufnahmen der Rollkörperträger eingeschnappt sind, die elastisch aufweitbare Kugelkopfaufnahmen aufweisen. Die in die Kugelkopfaufnahmen eingeschnappten Kugelköpfe ermöglichen eine stufenlose Änderung des Rollkörperwinkels bei nicht drehenden und bei drehenden Rollkörperwellen.

Eine Ausgestaltung der Erfindung sieht eine Radwellenbefestigungseinrichtung zu einer drehbaren oder drehfesten Befestigung des Allseitenrads auf einer Radwelle vor. Die Radwellenbefestigung kann formschlüssig und/oder kraftschlüssig sein. Eine Ausgestaltung sieht eine Klemmeinrichtung, beispielsweise nach Art einer Spannzange, als Radwellenbefestigungseinrichtung oder als Teil der Radwellenbefestigungseinrichtung zu einem drehfesten Festklemmen des Allseitenrads auf der Radwelle vor.

Eine Ausgestaltung der Erfindung sieht Rollkörperträger vor, die einen beispielsweise lochscheibenförmigen Flansch und eine beispielsweise rohrförmige Nabe aufweisen. Die Nabe und der Flansch sind insbesondere starr und/oder vorzugsweise gleichachsig miteinander verbunden, beispielsweise sind sie einstückig miteinander. Insbesondere steht die Nabe axial in einer Richtung von dem Flansch ab. Die beiden Rollkörperträger sind an ihren Naben miteinander verbunden, wobei die Naben axial unterschiedlich lang sind, so dass eine "Teilungsebene" sich außerhalb einer Mitte zwischen den Flanschen der beiden Rollkörperträger befindet. Eine axial längere Nabe eines der beiden Rollkörperträger stellt mehr Innenraum für eine Unterbringung beispielsweise der Radwellenbefestigungseinrichtung des Allseitenrads zur Verfügung.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figuren 1 und 2: ein Allseitenrad gemäß der Erfindung in perspektivischer Darstellung mit verschiedenen Blickrichtungen, wobei Rollkörper des Allseitenrads in Figuren 1 und 2 entgegengesetzt schräg angeordnet sind;
- Figur 3: zwei zusammengesetzte Rollkörperträger des Allseitenrads aus Figuren 1 und 2; und
- Figuren 4 und 5: die beiden Rollkörperträger aus Figur 3 als Einzelteile.

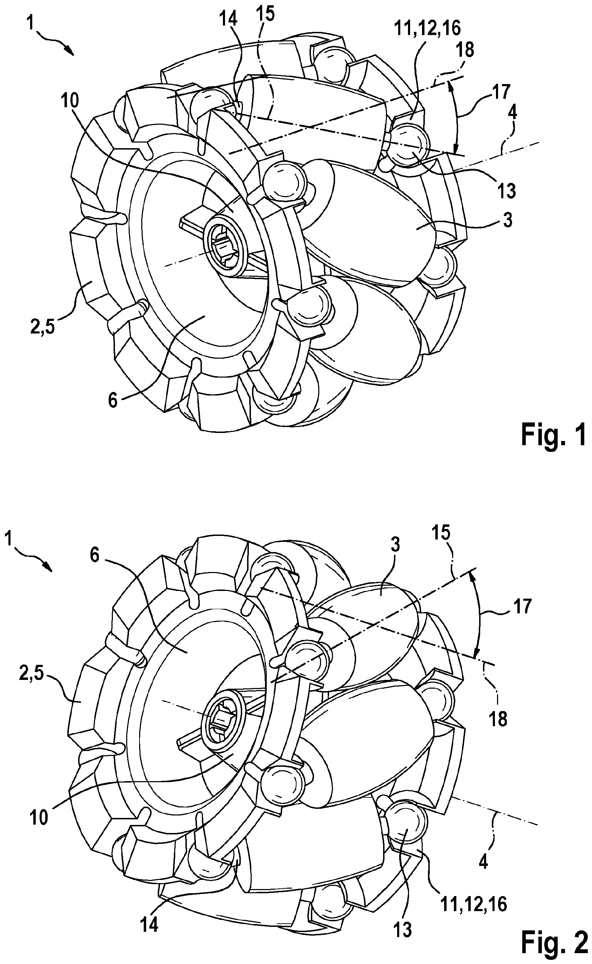

Das in Figuren 1 und 2 dargestellte, erfindungsgemäße Allseitenrad 1, das auch als omnidirektionales Rad bezeichnet werden kann, weist zwei gleichachsig angeordnete Rollkörperträger 2 und eine Anzahl Rollkörper 3 auf, die an einem Umfang der Rollkörperträger 2 beziehungsweise des Allseitenrads 1 angeordnet sind. Eine Achse der Rollkörperträger 2 bildet eine Radachse 4 des Allseitenrads 1.

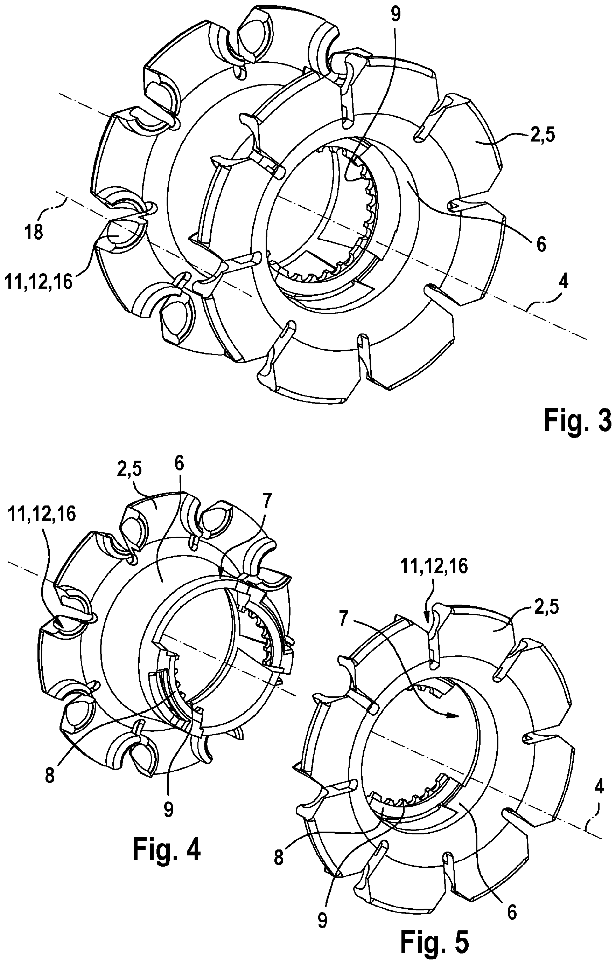

Wie in Figuren 4 und 5 zu sehen, weisen die Rollkörperträger 2 lochscheibenförmige Flansche 5 und zylinderrohrförmige Naben 6 auf, die koaxial zu den Flanschen 5, jeweils in Richtung des anderen Rollkörperträgers 2, vom Flansch 5 des einen Rollkörperträgers 2 abstehen. Im Ausführungsbeispiel sind die Flansche 5 und die Naben 6 einstückig miteinander, und ebenfalls im Ausführungsbeispiel sind die Naben 6 der beiden Rollkörperträger 2 axial verschieden lang, was allerdings nicht zwingend für die Erfindung ist.

An einander zugewandten Enden weisen die Naben 6 rechteckförmige Aussparungen 7 auf, wodurch Klauen 8 gebildet sind, die wie bei einer Klauenkupplung in die Aussparungen 7 der Nabe 6 des jeweils anderen Rollkörperträgers 2 greifen, so dass die beiden Rollkörperträger 2 in einem festgelegten Winkel zueinander angeordnet sind. Im Ausführungsbeispiel weisen die beiden Naben 6 jeweils zwei Klauen 8 und zwei Aussparungen 7 auf, die sich jeweils über 90° in der Umfangsrichtung erstrecken, so dass die beiden Rollkörperträger 2 auch um 180° verdreht zusammengesetzt werden können. Es sind auch Ausführungen mit jeweils einer Klaue 8 und einer Nabe 6, die sich jeweils über 180° in der Umfangsrichtung erstrecken und die die beiden Rollkörperträger 2 in einem Winkel zueinander festlegen, und Ausführungen mit mehr als jeweils zwei Klauen 8 und Aussparungen 7, die die Rollkörperträger 2 in mehr als zwei Winkellagen zueinander festlegen, möglich (nicht dargestellt). Unregelmäßig über den Umfang verteilt angeordnete Klauen 8 und Aussparungen 7 legen die Rollkörperträger 2 in einem Winkel zueinander fest (nicht dargestellt).

An oder nahe an ihren einander zugewandten Enden weisen die Naben 6 der beiden Rollkörperträger 2 Innenverzahnungen 9 zu einer durch Formschluss in axialer Richtung festen und drehfesten Befestigung einer Radwellenbefestigungseinrichtung 10 auf, die in Figuren 1 und 2 zu sehen ist. Im Ausführungsbeispiel ist die Radwellenbefestigungseinrichtung 10 als Klemmeinrichtung nach Art einer Spannzange ausgebildet, mit der das Allseitenrad 1 drehfest auf einer nicht dargestellten Radwelle festgeklemmt werden kann. Die axial längere Nabe 6 des einen Rollkörperträgers 2 bietet ausreichend Innenraum zur Unterbringung der Radwellenbefestigungseinrichtung 10.

An ihrem Umfang weisen die Flansche 5 der Rollkörperträger 2 Kugelkopfaufnahmen 11 auf, deren Innenflächen teilkugelförmig sind. Durch Werkstoff, Formgebung und Schlitze sind die Kugelkopfaufnahmen 11 elastisch aufweitbar, wodurch sie Schnappaufnahmen 12 bilden, in die Kugelköpfe 13 von Rollkörperwellen 14 lösbar eingeschnappt sind. Die Schnappaufnahmen 12, die allgemein auch als Rollkörperaufnahmen 16 für die Rollkörper 3 aufgefasst werden können, sind auf gedachten, zu der Radachse 4 konzentrischen Kreisen mit gleichem Radius angeordnet.

Die Rollkörper 3 des erfindungsgemäßen Allseitenrads 1 sind im Ausführungsbeispiel tonnenförmig, das heißt sie sind Rotationskörper mit balligen Umfangsflächen. Die Rollkörperwellen 14 durchsetzen die Rollkörper 3 axial und definieren Rollkörperachsen 15. An beiden Enden außerhalb der Rollkörper 3 weisen die Rollkörperwellen 14 einen Kugelkopf 13 auf, der in eine der Schnappaufnahmen 12 der Rollkörperträger 2 eingeschnappt sind. Die Kugelköpfe 13 sind drehbar in den Schnappaufnahmen 12, so dass die Rollkörper 3 um die Rollkörperachsen 15 drehbar sind. Es können auch die Rollkörper 3 auf den Rollkörperwellen 14 drehbar sein.

Die die Rollkörperaufnahmen 16 bildenden Schnappaufnahmen 12 sind gleichmäßig über den Umfang verteilt angeordnet, wobei die Schnappaufnahmen 12 der beiden Rollkörperträger 2 einander gegenüber, das heißt in gedachten Axialebenen des Allseitenrads 1 angeordnet sind. Die Kugelköpfe 13 der Rollkörperwellen 14 sind an den beiden Rollkörperträgern 2 in Schnappaufnahmen 12 eingeschnappt, die einander nicht gegenüberliegen, sondern in Umfangsrichtung versetzt sind. Dadurch verlaufen die Rollkörperachsen 15 schräg in einem Rollkörperwinkel 17 zu gedachten Parallelen 18 zur Radachse 4. Indem die Kugelköpfe 13 an einem der beiden Rollkörperträger 2 in Schnappaufnahmen 12 eingeschnappt werden, die in entgegengesetzter Umfangsrichtung versetzt sind, lassen sich die Rollkörper 3 mit ihren Rollkörperachsen 15 in entgegengesetzter Richtung schräg am Umfang des Allseitenrads 1 anordnen. Die Figuren 1 und 2 zeigen das Allseitenrad 1 mit entgegengesetzt schräg angeordneten Rollkörpern 3.

Die im Ausführungsbeispiel als Kugelkopfaufnahmen 11 ausgebildeten Rollkörperaufnahmen 16 ermöglichen ein Schwenken der Rollkörperwellen 14 in allen Richtungen, wobei Schwenkpunkte Mittelpunkte der Kugelköpfe 13 der Rollkörperwellen 14 sind. Diese Schwenkbarkeit in allen Richtungen kann auch als Winkelflexibilität der Rollkörperaufnahmen 16 aufgefasst werden. Sie ermöglicht die Anordnung der Rollkörperwellen 14 mit verschiedenen Rollkörperwinkeln 17 bei gleichzeitiger Drehbarkeit der Rollkörperwellen 14.

Die Rollkörper 3 stehen radial nach außen über die Umfänge der Flansche 5 der Rollkörperträger 2 über, so dass das Allseitenrad 1 auf den Umfangsflächen der Rollkörper 3 rollt. Beim oder zum Rollen kann sich das Allseitenrad 1 um seine Radachse 4 und/oder die Rollkörper 3 um die Rollkörperachsen 15 drehen, wodurch ein Rollen des Allseitenrads 1 in allen Richtungen möglich ist. Die Umfangsflächen der Rollkörper 3 sind ballig um einen Rundlauf des Allseitenrads 1 beim Rollen zu verbessern.

### Bezugszeichenliste

- 1: Allseitenrad
- 2: Rollkörperträger
- 3: Rollkörper
- 4: Radachse
- 5: Flansch
- 6: Nabe
- 7: Aussparung
- 8: Klaue
- 9: Innenverzahnung
- 10: Radwellenbefestigungseinrichtung
- 11: Kugelkopfaufnahme
- 12: Schnappaufnahme
- 13: Kugelkopf
- 14: Rollkörperwelle
- 15: Rollkörperachse
- 16: Rollkörperaufnahme
- 17: Rollkörperwinkel
- 18: Parallele

## Patentansprüche

1. Allseitenrad mit zwei Rollkörperträgern (2), die um eine Radachse (4) drehbar sind und an deren Umfang Rollkörper (3), auf denen das Allseitenrad (1) rollt, drehbar gelagert sind, deren Rollkörperachsen (15) in einem Rollkörperwinkel (17) zu gedachten Parallelen (18) zur Radachse (1) angeordnet sind, **dadurch gekennzeichnet, dass** die Rollkörperträger (2) winkelflexible Rollkörperaufnahmen (16) für die Rollkörper (3) aufweisen.

2. Allseitenrad nach Anspruch 1, **dadurch gekennzeichnet, dass** die Rollkörperwellen (14) mit verschiedenen Rollkörperwinkeln (17) angeordnet werden können.

3. Allseitenrad nach Anspruch 1 oder 2, **dadurch gekennzeichnet, dass** die beiden Rollkörperträger (2) in einem festgelegten Winkel miteinander verbunden sind.

4. Allseitenrad nach einem oder mehreren der Ansprüche 1 bis 3, **dadurch gekennzeichnet, dass** die Rollkörperaufnahmen (16) Schnappaufnahmen (12) für Rollkörperwellen (14) der Rollkörper (3) aufweisen, in die die Rollkörperwellen (14) lösbar eingeschnappt sind.

5. Allseitenrad nach einem oder mehreren der vorhergehenden Ansprüche, **dadurch gekennzeichnet, dass** der Rollkörperwinkel (17) durch Anordnen der Rollkörper (3) in verschiedenen Rollkörperaufnahmen (16) beziehungsweise durch Einschnappen der Rollkörperwellen (14) in verschiedene Schnappaufnahmen (12) eines oder beider Rollkörperträger (2) einstellbar ist.

6. Allseitenrad nach einem oder mehreren der vorhergehenden Ansprüche, **dadurch gekennzeichnet, dass** einer der beiden Rollkörperträger (2) zwei Rollkörperaufnahmen (16) für die Rollkörper (3), insbesondere zwei Schnappaufnahmen (12) für die Rollkörperwellen (14), für eine Rollkörperaufnahme (16), insbesondere für eine Schnappaufnahme (12), eines anderen der beiden Rollkörperträger (2) aufweist, die in einer Umfangsrichtung der Rollkörperträger (2) entgegengesetzt gleich weit zu der Rollkörperaufnahme (16), insbesondere Schnappaufnahme (12), des anderen Rollkörperträgers (2) versetzt sind.

7. Allseitenrad nach einem oder mehreren der Ansprüche 3 bis 6, **dadurch gekennzeichnet, dass** die Rollkörperwellen (14) Kugelköpfe (13) und die Schnappaufnahmen (12) der Rollkörperträger (2) elastisch aufweitbare Kugelkopfaufnahmen (11) aufweisen, in die die Kugelköpfe (13) der Rollkörperwellen (14) lösbar eingeschnappt sind.

8. Allseitenrad nach einem oder mehreren der vorhergehenden Ansprüche, **dadurch gekennzeichnet, dass** das Allseitenrad (1) eine Radwellenbefestigungseinrichtung (10) zur Befestigung des Allseitenrads (1) auf einer Radwelle aufweist.

9. Allseitenrad nach Anspruch 8, **dadurch gekennzeichnet, dass** die Radwellenbefestigungseinrichtung (10) eine Klemmeinrichtung nach Art einer Spannzange zu einem drehfesten Festklemmen des Allseitenrads (1) auf der Radwelle aufweist.

10. Allseitenrad nach einem oder mehreren der vorhergehenden Ansprüche, **dadurch gekennzeichnet, dass** Rollkörperträger (2) einen Flansch (5), an dessen Umfang die Rollkörperaufnahmen (16) angeordnet sind, und eine Nabe (6), an der die beiden Rollkörperträger (2) miteinander verbunden sind, aufweist, und dass die beiden Naben (6) axial unterschiedlich lang sind.

## Claims

1. Omni-wheel comprising two rolling body carriers (2) which are rotatable about a wheel axis (4) and on the circumference of which carriers rolling bodies (3), on which the omni-wheel (1) rolls, are rotatably mounted, the rolling body axes (15) of which bodies are arranged at a rolling body angle (17) relative to imaginary parallel lines (18) with respect to the wheel axis (1),
**characterized in that** the rolling body carriers (2) have angularly flexible rolling body receptacles (16) for the rolling bodies (3).

2. Omni-wheel according to claim 1, **characterized in that** the rolling body shafts (14) can be arranged at different rolling body angles (17).

3. Omni-wheel according to either claim 1 or claim 2, **characterized in that** the two rolling body carriers (2) are connected to one another at a fixed angle.

4. Omni-wheel according to one or more of claims 1 to 3,
**characterized in that** the rolling body receptacles (16) have snap receptacles (12) for rolling body shafts (14) of the rolling bodies (3), into which snap receptacles the rolling body shafts (14) are releasably snapped.

5. Omni-wheel according to one or more of the preceding claims,
**characterized in that** the rolling body angle (17) can be adjusted by arranging the rolling bodies (3) in different rolling body receptacles (16) or by snapping the rolling body shafts (14) into different snap receptacles (12) of one or both rolling body carriers (2).

6. Omni-wheel according to one or more of the preceding claims,
**characterized in that** one of the two rolling body carriers (2) has two rolling body receptacles (16) for the rolling bodies (3), in particular two snap receptacles (12) for the rolling body shafts (14), for a rolling body receptacle (16), in particular for a snap receptacle (12), of another of the two rolling body carriers (2), which are offset in a circumferential direction of the rolling body carriers (2) by the same distance in the opposite direction to the rolling body receptacle (16), in particular the snap receptacle (12), of the other rolling body carrier (2).

7. Omni-wheel according to one or more of claims 3 to 6,
**characterized in that** the rolling body shafts (14) have spherical heads (13) and the snap receptacles (12) of the rolling body carriers (2) have elastically expandable spherical head receptacles (11) into which the spherical heads (13) of the rolling body shafts (14) are releasably snapped.

8. Omni-wheel according to one or more of the preceding claims,
**characterized in that** the omni-wheel (1) has a wheel shaft fastening device (10) for fastening the omni-wheel (1) on a wheel shaft.

9. Omni-wheel according to claim 8, **characterized in that** the wheel shaft fastening device (10) has a clamping device in the manner of a collet chuck for rotationally fixed clamping of the omni-wheel (1) on the wheel shaft.

10. Omni-wheel according to one or more of the preceding claims,
**characterized in that** the rolling body carrier (2) has a flange (5), on the circumference of which the rolling body receptacles (16) are arranged, and a hub (6), on which the two rolling body carriers (2) are connected to one another, and **in that** the two hubs (6) are of axially different lengths.

## Revendications

1. Roue holonome comportant deux supports de corps de roulement (2) qui peuvent pivoter autour d'un axe de roue (4) et sur la circonférence desquels des corps de roulement (3), sur lesquels roule la roue holonome (1), sont montés de manière à pouvoir pivoter, dont les axes de corps de roulement (15) sont disposés à un angle de corps de roulement (17) par rapport à des parallèles imaginaires (18) par rapport à l'axe de roue (1), **caractérisée en ce que** les supports de corps de roulement (2) présentent des logements de corps de roulement (16) flexibles angulairement pour les corps de roulement (3).

2. Roue holonome selon la revendication 1, **caractérisée en ce que** les arbres de corps de roulement (14) peuvent être disposés à différents angles de corps de roulement (17).

3. Roue holonome selon la revendication 1 ou 2, **caractérisée en ce que** les deux supports de corps de roulement (2) sont reliés l'un à l'autre selon un angle défini.

4. Roue holonome selon une ou plusieurs des revendications 1 à 3, **caractérisée en ce que** les logements de corps de roulement (16) présentent des logements à enclenchement (12) pour les arbres de corps de roulement (14) des corps de roulement (3), dans lesquels logements les arbres de corps de roulement (14) sont enclenchés de manière amovible.

5. Roue holonome selon une ou plusieurs des revendications précédentes, **caractérisée en ce que** l'angle de corps de roulement (17) peut être réglé en disposant les corps de roulement (3) dans différents logements de corps de roulement (16) ou en enclenchant les arbres de corps de roulement (14) dans différents logements à enclenchement (12) d'un ou des deux supports de corps de roulement (2).

6. Roue holonome selon une ou plusieurs des revendications précédentes, **caractérisée en ce que** l'un des deux supports de corps de roulement (2) présente deux logements de corps de roulement (16) pour les corps de roulement (3), en particulier deux logements à enclenchement (12) pour les arbres de corps de roulement (14), pour un logement de corps de roulement (16), en particulier pour un logement à enclenchement (12), d'un autre des deux supports de corps de roulement (2), lesquels deux logements sont décalés dans une direction circonférentielle des supports de corps de roulement (2) opposée à une même distance du logement de corps de roulement (16), en particulier du logement à enclenchement (12), de l'autre support de corps de roulement (2).

7. Roue holonome selon une ou plusieurs des revendications 3 à 6, **caractérisée en ce que** les arbres de corps de roulement (14) présentent des têtes sphériques (13) et les logements à enclenchement (12) des supports de corps de roulement (2) présentent des logements de tête sphérique (11) pouvant être élargis de manière élastique et dans lesquels les têtes sphériques (13) des arbres de corps de roulement (14) sont enclenchées de manière amovible.

8. Roue holonome selon une ou plusieurs des revendications précédentes, **caractérisée en ce que** la roue holonome (1) présente un dispositif de fixation d'arbre de roue (10) pour la fixation de la roue holonome (1) sur un arbre de roue.

9. Roue holonome selon la revendication 8, **caractérisée en ce que** le dispositif de fixation d'arbre de roue (10) présente un dispositif de serrage à la manière d'une pince de serrage pour un serrage solidaire en rotation de la roue holonome (1) sur l'arbre de roue.

10. Roue holonome selon une ou plusieurs des revendications précédentes, **caractérisée en ce que** des supports de corps de roulement (2) présentent une bride (5), sur la circonférence de laquelle sont disposés les logements de corps de roulement (16), et un moyeu (6), au niveau duquel les deux supports de corps de roulement (2) sont reliés l'un à l'autre, et **en ce que** les deux moyeux (6) ont des longueurs axiales différentes.
